# EUROPEAN PATENT SPECIFICATION

(11) **EP 2 283 723 B1**
(45) Date of publication and mention of the grant of the patent: **01.03.2017**
(21) Application number: 08761540.7
(22) Date of filing: 29.04.2008
(51) Int. Cl.: A01K 1/015, C04B 38/00, B01J 20/00

(54) **METHOD FOR PRODUCING LOW-DENSITY AGGLOMERATING PET LITTER, AND RESULTING LITTER**
VERFAHREN ZUR HERSTELLUNG VON LOCKERER AGGLOMERATBILDENDER HAUSTIEREINSTREU UND SO ERHALTENE EINSTREU
PROCÉDÉ DE PRODUCTION D'UNE LITIÈRE POUR ANIMAUX DE COMPAGNIE, DE TYPE AGGLOMÉRANTE ET BASSE DENSITÉ, LITIÈRE AINSI PRODUITE

(43) Date of publication of application: 16.02.2011
(73) Proprietor: Sepiol, S.a., 19200 Azuqueca De Henares (Guadalajara) (ES)
(72) Inventor: MARCOS URGEL, Consuelo, E-19200 Azuqueca De Henares (Guadalajara) (ES); MARCOS URGEL, Belen, E-19200 Azuqueca De Henares (Guadalajara) (ES); GONZALEZ ALVAREZ, Alfredo, E-19200 Azuqueca De Henares (Guadalajara) (ES)
(74) Representative: Carpintero Lopez, Francisco
(86) International application number: PCT/ES2008/000294
(87) International publication number: WO 2009/133212

(56) References cited:
- WO-A1-99/46979
- CA-A1- 2 051 807
- CA-A1- 2 051 807
- ES-T3- 2 108 677
- ES-T3- 2 108 677
- US-A- 2 649 759
- US-A- 2 649 759
- US-A- 5 279 259
- US-A- 5 279 259
- US-A- 5 279 259
- US-A- 5 529 022
- US-A- 5 529 022

## Description

### Field of the Invention

The present invention is comprised within the sector of litters for animals, especially for cats, intended for collecting excrements, maintaining the hygiene of the animals.

It is specifically an attapulgite product which, by means of the process described in the present patent, develops a disaggregating capacity, which allows the use of the derivative granulates in beddings for animals, given that in contact with urine it is capable of forming easily separable clumps with a suitable size and cohesion.

### Background of the Invention

There is currently a large number of domestic animals which live in indoor spaces such as homes, farms or laboratories, which generally causes the appearance of bad odors and requires using beddings or litters which allow or facilitate controlling and removing solid and liquid excrements.

The way to control these odors is for the personnel in charge of caring for these animals to periodically remove the material from the boxes. The fecal matter can be removed by means of scoops specifically intended for this purpose. Nevertheless, part of the odors persists as a consequence of the bacterial decomposition and the oxidation-reduction of the urine remaining in the box.

In the European market, the products used in litters for animals are mainly natural clays (bentonites, sepiolites, attapulgites...), it being possible to find products of a very diverse nature such as wood derivatives (pellets, flakes, shavings, sawdust...), paper derivatives or other natural and/or synthetic products such as calcium silicate, silica gel or diatomaceous earth, among others.

The functional characteristics of these products are related to properties such as the size of the granules, the density, the liquid and odor absorption capacity, the clumping capacity, the mechanical strength, etc. These parameters, together with the appearance (color, shape and size of the particles,....) determine both the quality of the product and the acceptance by the "owner" and by the animal.

Thus, from a point of view of the consumer and of use, the market of products intended for litters for animals can be divided into two large groups depending on the clumping capacity thereof: the group of clumping products and the group of non-clumping products.

The European market of clumping products represents an annual consumption of more than 1,100,000 tons, materials being used which have the property of disintegrating when they come into contact with liquids, forming clumps which can be easily separated from the rest of the dry product.

The main products used as clumping litters for animals are bentonites formed by smectite of vary diverse types such as montmorillonite, beidellite, nontronite, hectorite, saponite or stevensite, among others, being able to be in sodium form, calcium form, magnesium form, etc.

The main advantage of these products lies in their low consumption. The maintenance performed in these beddings requires the clump to be periodically removed and replaced with clean product, it only being advisable to change all the product once a month.

The main drawback of bentonite products of this type is their high density, ranging between 800-1000 g/l, and for which this group of products is also known as "heavy" litters for animals. This high density has considerable drawbacks from an economic point of view (higher transport cost, larger weight of product per box,...) and from a point of view of usefulness for the consumer (larger load weight at the point of sale, larger waste weight,...)

On the other hand, there are also "lightweight" or non-clumping products, which have properties opposite those described above, such as a low density (which is why they are called "lightweight") and their non-clumping capacity.

Non-clumping litters for animals are traditionally formed by absorbent clays retaining the liquids evacuated by the animals, by means of absorption and adsorption processes, both on the outer surface and on the inner surface, maintaining the original shape of the particle. When the urine comes into contact with the mineral, a part is absorbed while another part percolates into the layer until it is completely retained.

Due to the emission of odors, these litters for animals must be cleaned periodically, such that it must be completely changed once or twice a week, since it is impossible to separate the wet material. A large part of the product is thus discarded without having been used, therefore the cost-effectiveness of the product is reduced.

The clays included within the group of lightweight materials are essentially sepiolite and attapulgite materials. These clays are characterized by their fibrous nature and by having densities comprised between 400 - 700 g/l and an absorption capacity of about 80 - 110% in water.

WO-A-99/46979 discloses a clumpable animal litter comprising hormite and sodium smectite.

A basic reacting alkali metal compound has been added.

US-A-5279259 discloses an attapulgite based animal litter.

The present invention is directly focused on a product formed from lightweight and highly absorbent attapulgite clay which further has the singular property of being a clumping and lightweight product.

The prepared attapulgite product is capable of absorbing liquid waste from the animals and simultaneously clumping, forming a mass with the sufficient size and stability to be separated from the clean and dry material.

Attapulgite is a mineral known since ancient times due to its use in ceramic materials and as an absorbent. Pre-Columbian Indians in Mexico manufactured a pigment referred to as "Maya blue" with attapulgite extracted from the Yucatan peninsula.

Attapulgite is a hydrated magnesium aluminium silicate the ideal unit cell of which corresponds to the following composition:

Mg₅Si₈(OH₂)₄(OH)₂O₂₀ · 4H₂O

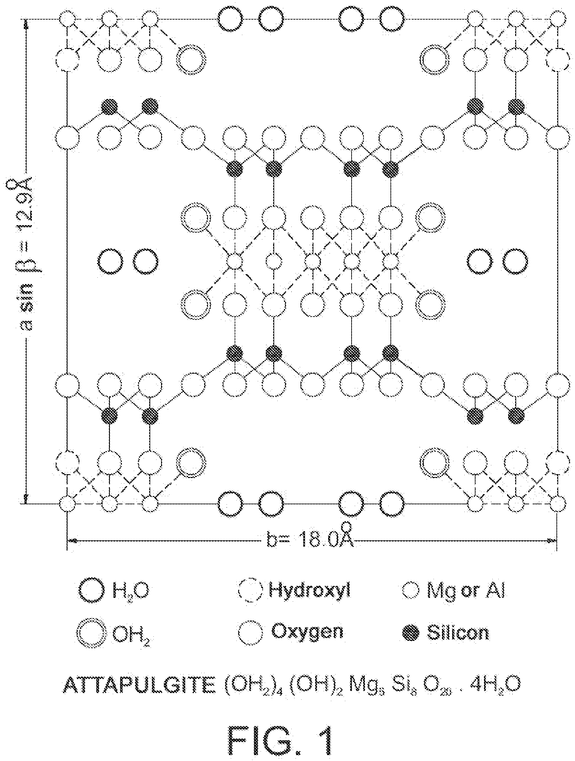

This clay mineral belongs to the group of 2:1 or T:O:T phyllosilicates due to their crystal structure being formed by a central octahedral layer formed by aluminium and magnesium between two layers of silicon tetrahedrons (2:1 structure, see Figure 1). These layers are bound to one another by oxygen atoms.

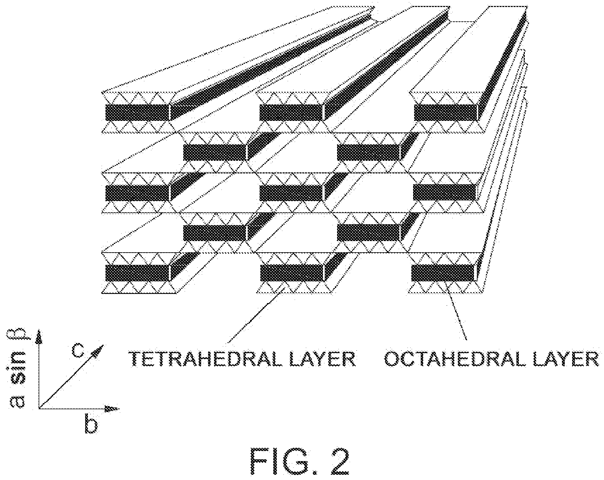

The tetrahedral layer is considered to be continuous despite the fact that every four units, the tetrahedrons reverse their direction by rotating about the Si-O-Si bonds, causing a discontinuity in the octahedral layer. This structure grows along the Z axis, causing the appearance of bars with large channels directed parallel to the longitudinal axis of the particle, as shown in Figure 2.

The existence of these channels makes the specific surface of attapulgite very high, generally in the order of 100-200 m²/g.

The structural cations of attapulgite can be substituted with others of a lower valency, for example, a silicon atom (Si⁴⁺) of the tetrahedral layer can be substituted with one of aluminium (Al³⁺). This substitution produces a residual negative charge on the surface of the clay which is compensated by means of the chemical adsorption of exchange cations such as Na⁺, K⁺, Mg²⁺, Ca²⁺, for example.

In addition to these charge centers, attapulgite has other active centers in unsaturated bonds of the edges and outer surfaces, as well as those due to the dissociation of the hydroxyl groups.

Both properties make the clay have a certain capacity to exchange ions, the typical cation exchange capacity for clays of this type being in the order of 15-35 meq/100 g.

The large specific surface added to the presence of various active centers makes attapulgite have excellent adsorption and absorption characteristics which validate the mineral for infinite applications in which the contact of a liquid with a solid is essential.

Attapulgite is used in a large amount of industrial fields, there being colloidal grades, known as thickening agents, gelling agents, stabilizers and thixotropic agents used in paints or drilling sludges, and grades with binding characteristics which are used as clarifying and bleaching agents, adsorbents in soils, animal litters, supports for pesticides or catalysts.

In relation to the use of clays as animal bedding, there are a large number of patents based on adding various reagents to minerals so that they acquire or reinforce their clumping nature. All of them use compounds different from those used in the present invention.

The following can be mentioned among them:
- In United States patent number US 5452684, Elazier-Davis, Beall and Hughes of American Colloid CO describe a method for obtaining a clumping cat litter product based on a process for extruding smectite (sodium bentonite, calcium bentonite and/or Fuller's earth) combined with the metering of a water-soluble adhesive such as CMC, guar gum or starch, among others.
- In United States patent number US 4685420, Stuart of Dow Chemical CO, proposes a method for improving a cat litter product by means of adding a polymer such as polyacrylate, for example. This additive together with the adsorbent material retains urine, making the polymer interact with the adsorbent material forming a gelled product capable of being removed from the box. The porous and inert solid products which are used as raw materials can be chips, shavings, sawdust, straw, clays, porous polyethylene, polypropylene or polystyrene beads, shredded paper, cloths, alfalfa, cotton, sand, bark or ground corn, lignocellulose, cellulose, calcium silicate or calcium sulfate.
- In United States patent number US 5129365, Hughes of American Colloid, details the method followed to obtain a clumping cat litter which is obtained by combining a non-compacted water-swellable sodium bentonite with a calcium bentonite clay. The combination of both clays favors the formation of clumps which can subsequently be removed from the litter.

- In Canadian patent number CA 02588492, Kirsch, Privitera, Lee, Borgese, Petska, and Fritter of The Clorox Company (2007) describe a method for improving the absorbent capacity and clumping properties of products intended for a cat litter. In this patent the product intended for a clumping cat litter is created by adding reinforcing fibers to adsorbent products. The absorbent fibers used can be, among others, natural fibers such as wool, cellulose, rayon, cotton, hemp, rice or corn fibers or synthetic materials such as polyester, nylon, polymers, copolymers, polypropylene, polyethylene, etc.
- In United States patent number US 4591581, Crampton and Whiting of Laporte Industries Ltd disclose a method for obtaining a product suitable for an animal litter in which particles smaller than 2 mm of a clay mineral are first selected. This mineral is dried and a water-dispersible colloid is subsequently metered. The mixture is then compacted in a press. The obtained product is ground and sorted to obtain the end product.
- In Spanish patent number ES 2087831, Alvarez Berenguer, Duch Martínez and Cámara Gandarillas of Tolsa, S.A, describe a process for preparing a product intended for adsorbent animal litters based on adding a polymer or mixture of water-activated absorbent polymers to a sepiolite with a particle size of 6 - 60 mesh ASTM and an apparent density of 400 - 800 g/l. When the obtained product comes into contact with the urine of the animal it is absorbed, clumping the clay and forming a mass with the sufficient stability to be removed.
- In United States patent number US 5207830, Crowan, House and Harrington of Venture Innovations Inc describe the process for preparing a lightweight and granulated cementitious product with the capacity to absorb liquids. In the process, an aerated cement slurry is added to a particle-forming agent. The product is left to age for a determined time so that the particles form and harden for the purpose of being able to be handled.

In United States patent number US 5032549, Lang and Meyer of Effem GMBH disclose a highly porous product with a high absorption capacity (50 - 300%), a pH between 5 - 9, a bulk density of 400 - 700 g/l, the BET surface of which is comprised between 20 - 200 m²/g. This product is obtained by firing a mixture of clays which can optionally contain a surfactant or deflocculant anionic or cationic aggregate.

### Object of the Invention

The object of the present invention is to therefore provide a method for obtaining a low-density and clumping type litter for pets.

Another object of the present invention is to provide the low-density and clumping type litter for pets obtainable by said method.

### Description of the Drawings

Figure 1 shows a diagram of the 2:1 structure of attapulgite, the major component of the starting mineral of the method of the present invention.
Figure 2 shows the depiction of the fiber of attapulgite, the major component of the starting mineral of the method of the present invention.
Figure 3 shows a comparative graph of the consumption (g of mineral per ml of ammonia solution) of litters for cats of the state of the art on the market and of the clumping attapulgite litter for animals object of the invention.
Figure 4 shows a comparative graph of the apparent density (g/l) of litters for cats of the state of the art on the market, of a traditional attapulgite litter and of a clumping attapulgite litter object of the invention.
Figure 5 shows a comparative graph of the water absorption capacity of litters for cats of the state of the art (on the market), of a traditional attapulgite litter and of a clumping attapulgite litter object of the invention.

### Description of the Invention

The object of the present invention is the process for obtaining an attapulgite product capable of easily disaggregating in contact with liquids of an aqueous nature, the use of derivative granulates as clumping beddings for animals being possible.

On the other hand, when attapulgite is used as a raw material, the obtained product has the enormous advantage of being a low-density material comprised within the group of "lightweight" products.

It is therefore an object of the present invention to obtain an attapulgite product having clumping characteristics in addition to its low density.

### Detailed Description of the Invention

The present invention is based on obtaining a lightweight granulate product which can easily disaggregate in aqueous media from a clay essentially formed by attapulgite with a content greater than 50% by weight, the presence of other clays such as bentonite and/or sepiolite and/or of other mineral species selected from dolomite, calcite, ankerite, quartz, feldspars and plagioclases in different percentages being possible.

This mineral is subjected to a primary grinding to obtain a granulate with a particle size less than 20 mm. This granulate product or any fraction obtained therefrom is subsequently mixed with water in a percentage of 20-80% by weight of the mixture and then kneaded, thus achieving the disaggregation of the clay and the increase of its useful surface.

The mass formed is then extruded by passing it through one or several open holes to obtain pellets, cylinders, rods or blocks of various shapes and sizes.

During this extrusion process, the entrance of water into the mineral is favored, breaking the bonds between fibers of attapulgite, making this product disintegrate and increasing the pore volume and the accessible surface area of the clay. On the other hand, it also favors a suitable compaction.

In this method of the invention, during the grinding step or during the kneading step, a sodium compound in solid state, or in aqueous suspension or solution in a percentage of 0.01-10% by weight with respect to the weight of mineral can be added. This compound must be capable of releasing sodium ions such as sodium carbonate, for example, although any compound capable of releasing sodium ions of the state of the art can be used.

The addition of this compound improves the disaggregation of the particles, enhancing the effect occurring during the described kneading and extruding steps.

The extruded product is dried with natural means, forces means or a combination of both until a moisture less than 20% by weight.

The dry material is ground until obtaining a granulate product with a particle size less than 8 mm which may subsequently be sorted into various granulates intended for a clumping animal bedding.

As a consequence of the described process a product is obtained which, with respect to the starting mineral, has a larger pore and interstitial space volume and a more accessible surface area. This translates into a lower density and a higher liquid absorption capacity. Furthermore, the extrusion process gives the hardness or strength of the starting mineral back to the product, allowing the suitable handling thereof.

According to the foregoing, the product object of the invention is characterized by:
- Having a low apparent density (ISO 697 method) due to the increase of porosity of the mineral. For a granulate with a particle size comprised in the range of 4.75 - 0.5 mm, it is about 400-700 g/l.
- High liquid absorption capacity (NF V 19.002 method) due to the increase of the pore and interstitial space volume and to larger contact surface of the clay. For a granulate with a particle size comprised in the range of 4.75 - 0.5 mm, the water absorption is about 250-450%, i.e., the product is capable of absorbing between 2.5 and 4.5 times its weight.
- Due to the disaggregation occurring in the process described above, the obtained attapulgite product is capable of absorbing liquid excrements of animals, instantaneously forming solid clumps with the sufficient size and mechanical stability to be immediately removed from the unused product easily and by means of the techniques commonly used for this purpose. The clumps formed do not disaggregate and are sufficiently stable to withstand the possible contact they may have with the animal such as sniffing or scratching occurring in order to be superficially covered, even although a long time has elapsed since their formation.
- The product consumption required for the formation of these clumps is low due to its low density and high binding properties, therefore reducing the use of product, its cost and the generation of waste.

The product object of the present invention can be intended for both the bedding of domestic animals such as cats, dogs, hamsters, mice, guinea pigs, rabbits, ferrets, skunks, etc., and laboratory animals (monkeys, mice, rats, cavies, cows, horses and sheep).

The material is suitable for absorbing urine, vomit and other waste liquids in animal slaughter tasks as well as in meat packing plants.

The obtained product has, compared to clumping products, the advantage of being lightweight, facilitating its transport and handling and, compared to lightweight products, its clumping capacity, which facilitates the maintenance of the box, reduces the use of product and prolongs the useful life of the mineral, reduces the waste generated, decreases the appearance of odors and enables the availability of an always clean litter.

### Embodiment example of the Invention

The claimed invention is explained with a series of examples and results obtained in different tests and analyses conducted, which do not intend to limit the scope thereof.

### Example 1

A layer with a thickness of about 7 cm of an absorbent attapulgite granulate with a particle size comprised between 6.00 and 0.50 mm (traditional lightweight cat litter) was placed in a plastic box with approximate dimensions of 30 x 40 x 10 cm. A layer with the same thickness (7 cm) of a granulate of the product object of the invention with a particle size comprised between 4.75 and 0.50 mm was placed in another box with the same characteristics.

125 ml of ammonia solution, distributed in five applications of 25 ml were applied daily on each material, simulating the behavior of an adult cat. On the day after each application, the cat litter of the product object of the present invention allowed the selective removal of the clumps formed, whereas this maintenance operation was not possible in the traditional cat litter.

After seven days, the traditional cat litter gave off a considerable ammonia odor and the particles of the bottom of the box were saturated with liquid, the continuation of its use being considered impossible. In the same period, the cat litter of the product object of the invention had no ammonia odor and was perfectly dry, which enables continuing its use.

Taking into account the volume of the two products used in this test, the traditional cat litter entails a weekly consumption of 8.4 liters (5.7 Kg), whereas the cat litter of the product object of the invention entails a weekly consumption of 1.7 liters (1.0 Kg).

With the use of the cat litter of the product object of the invention, the saving in absorbent is considerable, decreasing the amount of waste generated and eliminating the bad odor problems.

### Example 2

Six different products, all of them with a layer thickness of 7 cm, were placed in six plastic boxes with approximate dimensions of 20 x 20 x 10 cm. Five of the products corresponded to granulates with particle sizes comprised between 6.0 and 0.5 mm selected from the clumping cat litter products with the best quality from the entire market. The sixth product tested consisted of a granulate with a particle size comprised between 4.75 and 0.5 mm of the product object of the invention.

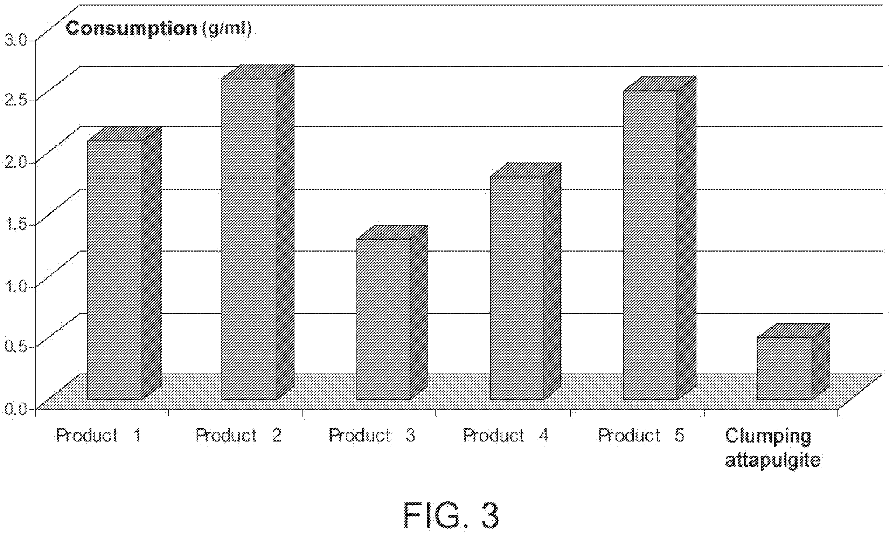

25 ml of ammonia solution were applied in each box, after 24 hours the clump formed in each box was removed, the amount of product used up for the formation thereof being evaluated. The results are shown in Table 1 and in Figure 3. It can be observed how the cat litter of the product object of the invention has a lower product consumption.

**Table 1: Comparative table of the consumption (g of mineral per ml of ammonia solution) of products on the market and the clumping attapulgite product object of the invention.**

| Cat litter | Consumption (g/ml) |
|---|---|
| Product 1 | 2.11 |
| Product 2 | 2.60 |
| Product 3 | 1.28 |
| Product 4 | 1.81 |
| Product 5 | 2.47 |
| Clumping attapulgite | 0.47 |

### Example 3

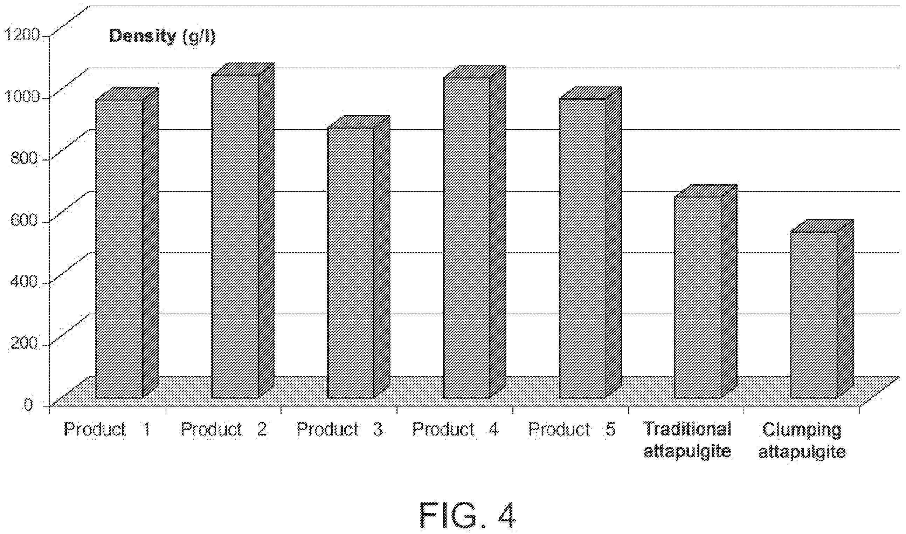

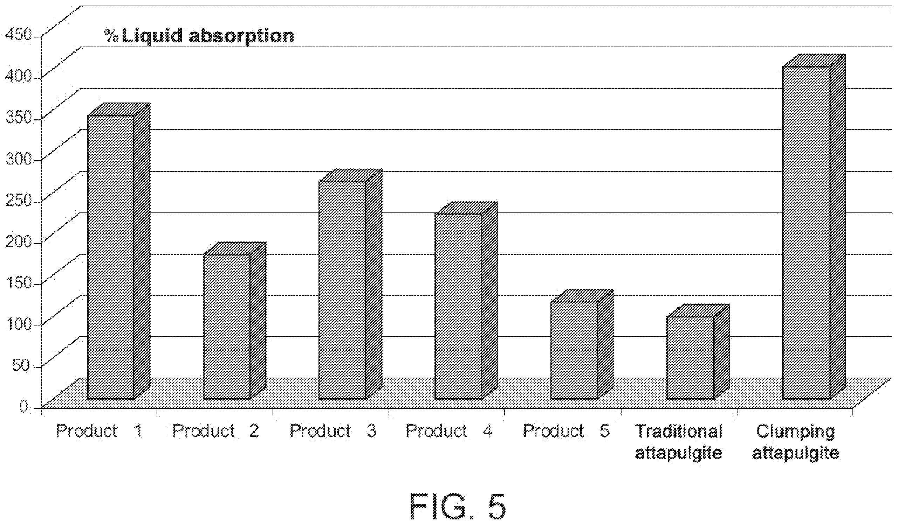

For the purpose of evaluating the physical characteristics of the cat litter object of the invention, the apparent density (ISO 697 method) and the liquid absorption capacity (NF V 19.002 method) were tested in the products used in Examples 1 and 2. The results are shown in Table 2 and in Figures 4 and 5. It can be observed how the cat litter of the product of the invention has a higher absorption capacity and a clearly lower density compared to the clumping cat litters of the state of the art. In relation to traditional attapulgite products, the cat litter of the product object of the invention has a lower density and a clearly higher absorption capacity.

**Table 2: Comparative table of the apparent density (g/l) and percentage of liquid absorption of 5 products on the market, of traditional attapulgite and of the clumping attapulgite product object of the invention.**

| Cat litter | Apparent density (g/l) | % Liquid absorption |
|---|---|---|
| Product 1 | 965 | 343.4 |
| Product 2 | 1045 | 175.5 |
| Product 3 | 875 | 263.7 |
| Product 4 | 1037 | 224.1 |
| Product 5 | 968 | 117.7 |
| Traditional attapulgite | 650 | 100 |
| Clumping attapulgite | 538 | 402.9 |

## Claims

1. Method for obtaining a low-density and clumping type litter for pets, **characterized in that** it comprises the following phases:
a) Grinding a mineral with a content of attapulgite greater than 50% by weight and variable contents of other clays and/or mineral species, to obtain a granulate with a particle size less than 20mm,
b) Kneading the ground material of phase a) with water in a percentage of 20-80% by weight of water with respect to the weight of the mixture,
c) Extruding the mass of phase b) to obtain pellets, cylinders, rods or blocks, of various shapes and sizes,
d) Drying the material extruded in phase c) by natural means, forced means or a combination of both,
e) Grinding, to obtain a granulate and
f) Sorting to obtain a granulate with a particle size comprised in the range between 0.5mm-4.75mm,
wherein a compound capable of releasing sodium ions in a percentage comprised between 0.01 and 10% by weight with respect to the weight of mineral is added in phase a) or in phase b).

2. Method for obtaining a low density and clumping type litter for pets according claim 1 **characterized in that** in the step d) the material is dried until a moisture less than 20% by weight.

3. Method for obtaining a low-density and clumping type litter for pets according to claim 1 or 2, **characterized in that** the other clays and/or mineral species are selected from smectite, sepiolite, calcite, dolomite, ankerite, quartz, feldspar and plagioclases.

4. Method for obtaining a low-density and clumping type litter for pets according to claim 1 or 2, **characterized in that** the compound capable of releasing sodium ions is sodium carbonate.

5. Low-density and clumping type litter for pets, obtained by the method according any of the claims 1 to 4 **characterized in that** the litter has a density of 400-700g/l for a granulate with particle size between 0.4-4.75 mm and a water absorption capacity of 250-450% for a granulate with particle size between 0.5-4.75mm.

## Patentansprüche

1. Verfahren zur Erzielung einer Einstreu mit geringer Dichte und vom Verklumpungs-Typ für Haustiere, **dadurch gekennzeichnet, dass** es die folgenden Phasen umfasst:
a) Zermahlen eines Minerals mit einem Gehalt an Attapulgit von größer als 50 Gew.-% und variablen Gehalten an anderen Tonen und/oder Mineralspezies, um ein Granulat mit einer Teilchengröße von geringer als 20 mm zu erhalten,
b) Kneten des Grundmaterials aus Phase a) mit Wasser in einem Prozentanteil von 20 - 80 Gew.-% an Wasser mit Bezug auf das Gewicht der Mischung,
c) Extrudieren der Masse aus Phase b), um Pellets, Zylinder, Stäbe oder Blöcke verschiedener Formen und Größen zu erhalten,
d) Trocknen des in Phase c) extrudierten Materials durch natürliche Mittel, erzwungene Mittel oder einer Kombination von beiden,
e) Zermahlen, um ein Granulat zu erhalten und
f) Sortieren, um ein Granulat mit einer Teilchengröße, umfassend den Bereich zwischen 0,5 mm - 4,75 mm, zu erhalten,
wobei eine Verbindung, die in der Lage ist, Natriumionen freizusetzen, in einem Prozentanteil, der zwischen 0,01 und 10 Gew.-% umfasst, mit Bezug auf das Gewicht an Mineral, in Phase a) oder in Phase b) zugegeben wird.

2. Verfahren zur Erzielung einer Einstreu mit geringer Dichte und vom Verklumpungs-Typ für Haustiere nach Anspruch 1, **dadurch gekennzeichnet, dass** in Schritt d) das Material bis zu einer Feuchtigkeit von weniger als 20 Gew.-% getrocknet wird.

3. Verfahren zur Erzielung einer Einstreu mit geringer Dichte und vom Verklumpungs-Typ für Haustiere nach Anspruch 1 oder 2, **dadurch gekennzeichnet, dass** die anderen Tone und/oder Mineralspezies aus Smektit, Sepiolit, Calcit, Dolomit, Ankerit, Quarz, Feldspat und Plagioklasen gewählt werden.

4. Verfahren zur Erzielung einer Einstreu mit geringer Dichte und vom Verklumpungs-Typ für Haustiere nach Anspruch 1 oder 2, **dadurch gekennzeichnet, dass** die Verbindung, die in der Lage ist, Natriumionen freizusetzen, Natriumcarbonat ist.

5. Einstreu mit geringer Dichte und vom Verklumpungs-Typ für Haustiere, erhalten durch das Verfahren gemäß irgendeinem der Ansprüche 1 bis 4, **dadurch gekennzeichnet, dass** die Einstreu eine Dichte von 400 - 700 g/l für ein Granulat mit einer Teilchengröße zwischen 0,4 - 4,75 mm und eine Wasserabsorptionskapazität von 250 - 450 % für ein Granulat mit einer Teilchengröße zwischen 0,5 - 4,75 mm aufweist.

## Revendications

1. Procédé d'obtention d'une litière pour animaux domestiques de faible densité et de type à agglomération,
**caractérisé en ce qu'**
il comprend les étapes suivantes consistant à :
a) broyer un composé minéral ayant une teneur en attapulgite supérieure à 50% en poids et des teneurs variables en d'autres argiles et/ou éléments minéraux pour obtenir un granulat ayant une granulométrie inférieure à 20 mm,
b) malaxer le matériau de base issu de l'étape a) avec de l'eau selon une proportion de 20-80% en poids d'eau par rapport au poids du mélange,
c) extruder la masse issue de l'étape b) pour obtenir des pastilles des cylindres, des barres ou des blocs de formes et de dimensions variées,
d) sécher le matériau extrudé issu de l'étape c) par des voies naturelles ou par des voies forcées ou par une combinaison de ces deux voies,
e) effectuer un broyage pour obtenir un granulat, et
f) effectuer un tri de façon à obtenir un granulat ayant une granulométrie située dans la plage de 0,5 mm à 4,75 mm,
un composé susceptible de libérer des ions sodium selon une proportion comprise entre 0,01 et 10 % en poids par rapport au poids du matériau étant ajouté, lors de l'étape a) ou lors de l'étape b).

2. Procédé d'obtention d'une litière pour animaux domestiques de faible densité et de type à agglomération conforme à la revendication 1, **caractérisé en ce que**
lors de l'étape d) le matériau est séché jusqu'à ce que l'humidité soit inférieure à 20% en poids.

3. Procédé d'obtention d'une litière pour animaux domestiques de faible densité et de type à agglomération conforme à la revendication 1 ou 2,
**caractérisé en ce que**
les autres argiles et/ou éléments minéraux sont choisis parmi les composés suivants :
smectite, sépiolite, calcite, dolomite, ankérite, quartz, feldspar, et plagioclases.

4. Procédé d'obtention d'une litière pour animaux domestiques de faible densité et de type à agglomération conforme à la revendication 1 ou 2,
**caractérisé en ce que**
le composé susceptible de libérer des ions sodium est du carbonate de sodium.

5. Litière pour animaux domestiques de faible densité et de type à agglomération obtenue par la mise en oeuvre du procédé conforme à l'une quelconque des revendications 1 à 4,
**caractérisée en ce qu'**
elle a une densité de 400-700g/l dans le cas d'un granulat ayant une granulométrie comprise entre 0,4-4,75 mm et une capacité d'absorption d'eau de 250-450 % dans le cas d'un granulé ayant une granulométrie comprise entre 0,5-4,75 mm.
